**Europäisches Patentamt**

**European Patent Office**

**Office européen des brevets**

(19)

(11) Numéro de publication : **0 278 943 B1**

## (12) FASCICULE DE BREVET EUROPEEN

(45) Date de publication du fascicule du brevet :
**03.06.92 Bulletin 92/23**

(51) Int. Cl.⁵ : **B60S 9/18**

(21) Numéro de dépôt : **88870012.7**

(22) Date de dépôt : **03.02.88**

(54) **Dispositif de manoeuvre de remorques.**

(30) Priorité : **12.02.87 BE 8700111**
**31.03.87 BE 8700325**

(43) Date de publication de la demande :
**17.08.88 Bulletin 88/33**

(45) Mention de la délivrance du brevet :
**03.06.92 Bulletin 92/23**

(84) Etats contractants désignés :
**AT BE CH DE ES FR GB GR IT LI LU NL SE**

(56) Documents cités :
**FR-A- 1 095 463**
**GB-A- 2 175 553**
**US-A- 3 117 766**
**US-A- 3 356 172**
**US-A- 3 826 322**

(73) Titulaire : **Sabro Limited**
**50 Stratton Street**
**London W1X 5FL (GB)**

(72) Inventeur : **Sacco, Angelo**
**21 rue Garde Dieu**
**B-4900 Liège (BE)**

(74) Mandataire : **Van Malderen, Michel**
**p.a. Office van Malderen 85/043 Boulevard de**
**la Sauvenière**
**B-4000 Liège (BE)**

EP 0 278 943 B1

**Description**

La présente invention est relative à un dispositif à moteur facilitant les manoeuvres de remorques telles que caravanes, remorques transportant des chevaux ou bateaux et autres, lorsqu'elles sont détachées du véhicule tracteur.

Les remorques classiques comportent un dispositif généralement escamotable qui facilite les manoeuvres manuelles lorsqu'elles sont détachées du véhicule tracteur et qui comporte généralement une roue montée sur un arbre pivotant ou sur une fourche pivotante. Toutefois, il devient difficile de guider les remorques de manière manuelle et de les pousser en vue de leur déplacement lorsque leur poids et leurs dimensions deviennent relativement importants. Cette tâche est encore rendue plus dure lorsque le terrain présente des irrégularités.

La présente invention vise à fournir un dispositif de manoeuvre de remorque qui facilite notablement les manoeuvres des remorques lorsque celles-ci sont détachées du véhicule tracteur.

Un autre but de la présente invention vise à fournir un dispositif du type susmentionné qui comporte au moins un moteur d'entraînement et qui assiste l'opérateur dans les mouvements de déplacement, sans que celui-ci ne soit obligé d'exercer des efforts musculaires importants. Un but complémentaire de la présente invention consiste à fournir un dispositif de manoeuvre de construction simple et robuste qui est particulièrement bien adapté aux remorques sur lesquelles il est monté.

Selon la présente invention, le dispositif du type défini dans le préambule de la revendication 1 et divulgué par US-A-3,356,172 présente les caractéristiques énoncées dans la partie caractérisante de la rev.1.

La roue peut donc être remontée ou abaissée par rapport au timon de la remorque, selon que l'opérateur a accroché la remorque au véhicule tracteur ou qu'il a l'intention de déplacer celle-ci indépendamment du véhicule tracteur.

Dans ce cas, le moyen d'orientation de ladite roue consiste en un guidon ou volant manuel agencé sur le carter du moteur d'entraînement par exemple.

Dans cette forme d'exécution, l'arbre réglable en hauteur peut coulisser dans un fourreau solidaire du timon de la remorque.

Avantageusement, l'un au moins des moyens d'entraînement comporte une prise de force supplémentaire qui permet de coupler différents accessoires comme une pompe hydraulique, un treuil et autres.

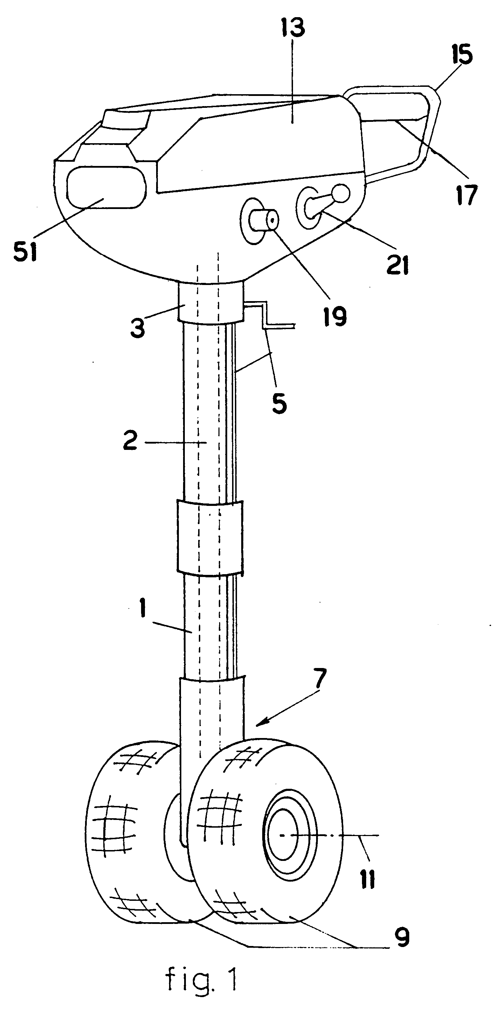

L'invention est décrite ci-dessous plus en détail à l'appui de la figure 1, qui est une représentation schématique d'une variante conforme à la présente invention; et

A la figure 1 on a représenté un dispositif de manoeuvre de remorques conforme à une première variante de la présente invention.

Ledit dispositif comporte une gaine creuse 1 montée sur le timon d'une remorque (non représenté) telle qu'une caravane, remorque de bateaux ou autres. Ladite gaine creuse 1 peut coulisser dans un fourreau 3 rendu solidaire du timon (non représenté) et être réglée en hauteur par le montage à crémaillère 5 représenté schématiquement.

L'extrémité inférieure 7 de ladite gaine creuse porte deux roues 9 montées sur un axe commun 11 substantiellement perpendiculaire à ladite gaine 1.

Sur la partie supérieure est agencé un moyen d'entraînement tel qu'un moteur à combustion interne suivi d'un réducteur, réunis dans un carter 13. Ledit moyen d'entraînement transmet son mouvement de rotation à une broche 2 montée à l'intérieur de la gaine creuse 1 et ensuite, moyennant un engrenage approprié, aux roues 9.

En vue de pouvoir guider la remorque dans les directions voulues, le dispositif conforme à la présente invention comporte un moyen d'orientation des roues 9. Dans le cas de la figure 1, celui-ci consiste avantageusement en un guidon 15 solidaire du carter 13 qui transmet le mouvement de pivotement exercé manuellement par l'opérateur aux roues 9.

Avantageusement, le dispositif de la présente invention est encore équipé d'un dispositif de sécurité qui arrête immédiatement le moyen d'entraînement dès que l'opérateur n'est plus en mesure de contrôler le dispositif. Ledit dispositif de sécurité peut consister en un levier débrayage 17 que l'opérateur doit tenir en même temps que le guidon 15.

Le dispositif conforme à la présente invention peut encore présenter une prise de force auxiliaire 19 éventuellement embrayable à l'aide d'un levier 21. Cette prise de force permet de coupler divers accessoires. On peut par exemple citer une pompe hydraulique pour faire fonctionner une installation hydraulique, comme une remorque basculante ou un treuil de traction destiné par exemple, aux remorques pour bateaux ou encore remorques destinées au dépannage de voitures.

En variante, on peut encore prévoir de remplacer le moteur électrique 13 par un moteur à combustion dont une deuxième prise de force est à coupler au réducteur 15, éventuellement à l'aide d'une transmission flexible.

On constate que, par la présente invention, les buts poursuivis sont atteints.

Le dispositif de manoeuvre conforme à la présente invention, pilotée par le conducteur, peut pousser, tirer la remorque dans toutes les directions sans grand effort de la part du conducteur. La vitesse est avantageusement réglée à une valeur approchant celle du pas d'homme.

On peut également encore prévoir d'autres accessoires comme un phare 51 ou analogues.

De manière analogue, on peut prévoir diverses manières de fixation ou d'attelage du dispositif de l'invention au timon de la remorque.

## Revendications

1. Dispositif à moteur destiné à faciliter les manoeuvres de remorques détachées du véhicule tracteur, comportant un arbre (1, 2) agencé sur le timon d'une remorque et réglable en hauteur au bout duquel est montée au moins une roue (9) dont l'axe est perpendiculaire audit arbre (1), au moins un moyen d'entraînement (13) de ladite roue comportant un moteur électrique ou à combustion et un réducteur de vitesse, un moyen d'orientation (15) de ladite roue (9), l'arbre (1, 2) consistant en une gaine creuse (1) réglable en hauteur moyennant un simple montage de crémaillère (5) caractérisé en ce que le moyen d'entraînement est monté sur l'extrémité libre supérieure de l'arbre (1) et que dans la gaine creuse (1) de l'arbre est logée une broche (2) qui transmet le mouvement de rotation du moyen d'entraînement (13) à au moins une roue (9).

2. Dispositif selon la revendication 1 caractérisé en ce que le moyen d'orientation de ladite roue consiste en un guidon (15) ou volant manuel agencé sur le carter du moteur d'entraînement par exemple.

3. Dispositif selon la revendication 1 caractérisé en ce que l'arbre réglable en hauteur est agencé de manière coulissable dans un fourreau (3) solidaire du timon de la remorque.

4. Dispositif selon l'une quelconque des revendications précédentes caractérisé en ce qu'il comporte une prise de force auxiliaire (19).

5. Dispositif selon l'une quelconque des revendications précédentes caractérisé en ce qu'il comporte un phare (51).

6. Remorque équipée d'un dispositif de manoeuvre selon l'une quelconque des revendications précédentes.

## Patentansprüche

1. Vorrichtung mit Motor, die dazu bestimmt ist, die Manövrierung von Anhängern, die von der zugmaschine abgehängt sind, zu erleichtern, aus einer Welle (1, 2), die an der Deichsel eines Anhängers angebracht ist und in der Höhe einstellbar ist, und an deren Ende mindestens ein Rad (9) angebracht ist, dessen Achse senkrecht zu der Welle (1) angeordnet ist, mindestens einem Antriebsmittel (13) für das besagte Rad, mit einem Elektromotor oder einem Verbrennungsmotor und einem Untersetzungsgetriebe, und aus einem Ausrichtungsmittel (15) für das Rad (9), wobei die Welle (1, 2) aus einem hohlen Stab (1) besteht, der mittels eines einfachen Zahnstangentriebs (5) in der Höhe einstellbar ist, **dadurch gekennzeichnet**, daß das Antriebsmittel auf dem oberen freien Ende der Welle (1) angebracht ist, **und daß** in dem hohlen Stab (1) der Welle eine Spindel (2) angeordnet ist, die die Rotationsbewegung des Antriebsmittels (13) auf mindestens ein Rad (9) überträgt.

2. Vorrichtung gemäß Anspruch 1, **dadurch gekennzeichnet, daß** das Ausrichtungsmittel für das besagte Rad aus einer Lenkstange (15) oder einem Handrad besteht, die beispielsweise auf dem Gehäuse des Antriebsmotors angebracht sind.

3. Vorrichtung gemäß Anspruch 1, **dadurch gekennzeichnet, daß** die in der Höhe einstellbare Welle in einer mit der Deichsel des Anhängers fest verbundenen Gleithülse (3) verschiebbar ist.

4. Vorrichtung gemäß irgendeinem der vorhergehenden Ansprüche, **dadurch gekennzeichnet, daß** sie eine Hilfszapfwelle (19) aufweist.

5. Vorrichtung gemäß irgendeinem der vorhergehenden Ansprüche, **dadurch gekennzeichnet, daß** sie einen Scheinwerfer (51) aufweist.

6. Anhänger, ausgerüstet mit einer Manövriervorrichtung gemäß irgendeinem der vorhergehenden Ansprüche.

## Claims

1. A motorized device intended to aid the manoeuvers of trailers detached from the towing vehicle, comprising a shaft (1,2) arranged on the drawbar of a trailer and adjustable for height at the end of which at least one wheel (9) is mounted whose axis is perdendicular to said shaft (1), at least one means (13) for driving said wheel, comprising an electric or an internal combustion motor and a speed reducer, and a means (15) for swivelling said wheel, said shaft (1,2) consisting of a hollow casing (1) adjustable for height, depending on a simple rack and pinion assembly (5), characterized in that the driving means is mounted on the top free end of the shaft (1) and in that, in the hollow casing of the rack (1) a pin (2) is located, which transmits the rotary movement of the driving means (13) to at least one wheel (9).

2. A device according to claim 1, characterized in that the means of swivelling said wheel comprises a handle (15) or manual steering wheel arranged for example, on the casing of the driving motor.

3. A device as claimed in claim 1 wherein the shaft adjustable for height is arranged so as to slide in a sleeve (3) integral with the drawbar of the trailer.

4. A device as claimed in any one of the preceding claims, which comprises an auxiliary power take-off (19).

5. A device as claimed in any one of the preceding claims, which comprises a headlight (51).

6. A trailer fitted with a maneuvering device as claimed in any one of the preceding claims.

fig. 1